# EUROPEAN PATENT APPLICATION

(11) **EP 2 581 000 A1**
(43) Date of publication of application: **17.04.2013**
(21) Application number: 11184953.5
(22) Date of filing: 13.10.2011
(51) Int. Cl.: A47J 27/04, A47J 36/32

(54) **Food steamer**

(71) Applicant: Koninklijke Philips Electronics N.V., 5621 BA Eindhoven (NL)
(72) Inventor: Zwaneburg, Godwin, D., 5600 AE Eindhoven (NL)
(74) Representative: Damen, Daniel Martijn

(57) **Abstract**

A food steamer is disclosed. It comprises a plurality of compartments to receive food to be cooked, a chamber to receive water, a heater to heat the water in the chamber to generate steam for cooking food placed in said compartments and user input means configured to enable a user to select a power setting for the heater depending on how many compartments are being used to cook food.

## Description

### FIELD OF THE INVENTION

This invention relates to a food steamer having a plurality of compartments or baskets to receive food to be cooked. A method of controlling a food steamer to cook food is also disclosed.

### BACKGROUND OF THE INVENTION

A food steamer is a kitchen appliance used for preparing foods in a sealed container that limits the escape of steam or liquid. Boiling water forms steam that's used to cook the food without oil or submerging it in water and generally has several compartments to receive the food to be cooked and a reservoir for containing water which is heated to boiling point by a heating element to generate steam. The steam is supplied to the food compartments to cook the food. A food steamer is primarily used to steam vegetables or rice. However, it can also be used to steam meat or fish. Steaming food is used as a healthier alternative for cooking. Steaming food allows it to retain color, nutrients and crispness.

Although steam cookers generally have at least two compartments to receive food, it is common for user's to steam food in only some of the compartments at any one time, the remaining compartments either remaining empty or simply not attached to the cooker. However, conventional steam cookers generate and provide steam sufficient to cook food placed in all the compartments irrespective of whether all, or only some, of the compartments are being used to cook food or not. This results in a higher power consumption than is necessary and so reduces the overall efficiency of the appliance.

The present invention seeks to overcome or substantially alleviate the aforementioned disadvantage with conventional food steamers and so provide a more efficient food steamer.

### SUMMARY OF THE INVENTION

According to the invention, there is provided a food steamer comprising a plurality of compartments to receive food to be cooked, a chamber to receive water, a heater to heat the water in the chamber to generate steam for cooking food placed in said compartments and means configured to determine a power setting for the heater depending on which compartments are being used to cook food. As it is possible to select, either manually or automatically, an optimum power setting for the heater relative to the number of compartments that are being used to cook food, the overall power consumption of the food steamer is reduced as less steam is required when not all the compartments are being used and full power is not required.

In one embodiment, the means configured to determine a power setting for the heater may comprise a sensor to automatically detect how many compartments with food to be cooked are placed on the steamer. By providing a sensor to determine how many compartments are in use, the user is not required to make any manual selection and the optimum power setting is automatically determined and set without human intervention.

In an alternative embodiment, the means configured to determine a power setting for the heater comprises a user operable switch having a number of positions, each position corresponding to a number of compartments capable of receiving food to be cooked. Although automatic control of the power in relation to the number of compartments makes the food steamer easier to use, the user may also want to have some manual control over the power setting, and this can be enabled by providing a user operable switch to allow a user to select the number of compartments that are in use.

The food steamer may have two compartments to receive food to be cooked. In this instance, the switch may have first and second positions. The power supplied to the heater may be low when the switch is in its first position relative to the power supplied to the heater when the switch is in its second position. If the food steamer has two compartments, the provision of a switch to select one or both compartments enables the power setting to be easily controlled.

Conveniently, the heater may then have two heating elements so that power is supplied to only one heating element when the switch is in its first position and both heating elements when the switch is in its second position. The heat generated by the heater may be easier to control by providing two separate elements in which one or both heating elements are switched on, depending on the heat required. The provision of two heating elements, as opposed to varying the power supplied to a single heating element, simplifies the heating control.

An alternative food steamer may have three compartments to receive food to be cooked. In this instance, the switch may have a first position, a second intermediate position and a third position. The power supplied to the heater may be low when the switch is in its first position relative to the intermediate and third positions and the power supplied to the heater when the switch is in its intermediate position may be at a level between the power supplied to the heater when the switch is in its first or third positions. Conveniently, the heater may comprise three heating elements so that power is supplied to one element when the switch is in its first position, two elements when the switch is in its intermediate position and all three elements when the switch is in its third position. Rather than provide three separate heating elements, it is possible to provide only two heating elements, both of which may be operated simultaneously when all three compartments are in use. As with the embodiment having two compartments, the heat generated by the heater may be easier to control by providing separate elements in which one, two or all three heating elements are switched on, depending on the heat required. Alternatively, a single heater with a Triac power control may be employed.

In a preferred embodiment, an LED is associated with each switch position to enable a user to clearly see the selected power setting.

If the food steamer has two compartments and two corresponding switch positions, one LED may be illuminated when the switch is in its first position and both LED's may be illuminated when the switch is in its second position. The number of LED's that are illuminated then provides the user with an indication as to the power level selected. Alternatively, one LED may be activated when the switch is in its first position and a different LED may be activated when the switch is in its second position. The food steamer may have some identifying indicia on it, adjacent to each of said LED's so that a user can visibly tell which option has been selected.

If the food steamer has three compartments and three corresponding switch positions, one LED may be illuminated when the switch is in its first position, two LED's may be illuminated when the switch is in its intermediate position and three LED's may be illuminated when the switch is in its third position. The number of LED's that are illuminated then provides the user with an indication as to the power level selected.

In a preferred embodiment, the heater is configured to operate at a power setting higher than a setting determined by said means for a predetermined time period after the food steamer is switched on. This 'boost' function initially heats the food steamer and the food so that it reaches a minimum temperature quickly, and without relating the power to the number of compartments that are in use.

The heater may be configured to operate at a different higher power setting depending on the number of compartments being used to cook food. In this embodiment, the high power may also be dependent on the number of compartments that are being used. For example, the higher power setting may be lower when one compartment is in use than if two or three compartments are in use. A reduction in the higher power setting reduces the energy consumption of the device.

The heater is preferably configured to operate at the higher power setting for a predetermined time period that is dependent on the number of compartments being used to cook food, as determined by said means. In addition or instead of controlling the higher power level based upon the number of compartments in use, the higher power level may also be sustained for a time period that changes depending on the number of compartments that are being used to cook food. A reduction in the period of time at which the food steamer operates at a higher power level will result in reduced energy consumption.

Although the total overall cooking time may be the same irrespective of the number of compartments being used to cook food, it is also envisaged that the total cooking time, including the time at which the heater operates at a higher power setting and the time at which the heater operates at the power setting determined by said means, may change depending on the number of compartments being used to cook food, as determined by said means.

For example, the food steamer may include a plurality of preset operation times, the selected preset operation time may then be dependent on the number of compartments being used to cook food. Therefore, the cooking times are adjusted to adapt them to the longer cooking time needed when more compartments are being used to cook food.

According to another aspect of the invention, there is provided a food steamer comprising a plurality of compartments to receive food to be cooked, a chamber to receive water, a controller, a heater to heat the water in the chamber to generate steam for cooking food placed in said compartments, and user input means for inputting a power setting to the controller, wherein the controller controls the heater so that it operates at a power higher than the power input by the user via the user input means for a predetermined time period after the food steamer is switched on, wherein the controller is configured to detect the number of compartments that are being used to cook food or into which food has been placed and to vary the predetermined time period in dependence on that detection. In this embodiment, the heater operates at a higher power setting for a predetermined time period after the food steamer is switched on, irrespective of the selected power setting, so as to bring the food steamer and the food up to a minimum temperature quickly. However, in this case, the time at which the heater operates at its higher power setting is dependent on the number of compartments that are being used to cook food, so that the time can be reduced when less compartments are in use, thereby reducing the overall power consumption.

According to the invention, there is also provided a method of controlling a food steamer comprising a plurality of compartments to receive food to be cooked, a chamber to receive water, a heater to heat the water in the chamber to generate steam for cooking food placed in said compartments, the method comprising the step of determining a power setting for the heater in dependence on the compartments being used to cook food. As the method includes the step of determining a power setting for the heater based upon the number of compartments being used to cook food, the overall power consumption can be reduced when not all compartments are in use.

The method may include the step of selecting a power setting using a user operable switch in dependence on how many compartments are used to cook food. The power can be set manually, giving the user maximum control, although the food steamer may also determine the number of compartments which are being used to cook food and select a power setting automatically based on that determination, thereby making the food steamer easier to use.

### BRIEF DESCRIPTION OF THE DRAWINGS

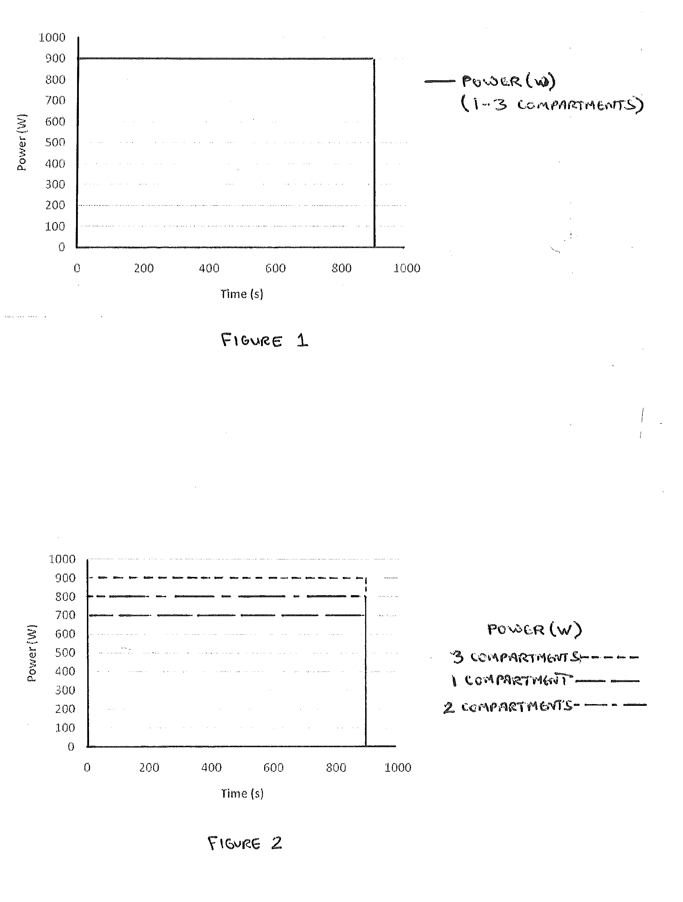

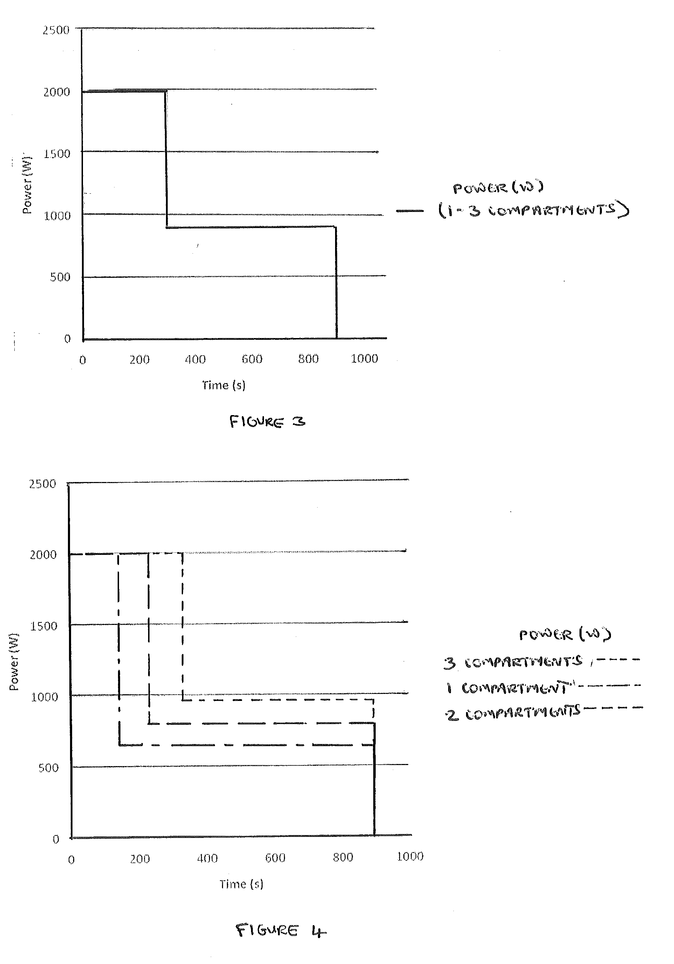

Preferred embodiments of the invention will now be described, by way of example only, with reference to Figures 2 and 4 of the accompanying drawings, in which:
Figure 1 is a graph showing the relationship between power and time for a traditional food steamer having three food compartments;
Figure 2 is a graph showing the relationship between power and time for a food steamer according to the present invention and in which the power level is dependent on the number of food compartments that are actually present on the food steamer or which are present on the food steamer and contain food to be cooked;
Figure 3 is a graph showing the relationship between power and time for a traditional food steamer having three food compartments that also have a boost function to provide an increased power level during an initial start-up period; and
Figure 4 is a graph showing the relationship between power and time for a food steamer according to the present invention and which has a boost function to provide increased power during an initial start-up period.

### DETAILED DESCRIPTION OF THE EMBODIMENTS

A food steamer according to an embodiment of the invention has at least two compartments for receiving food to be cooked. It also has a chamber to receive water, a heater to heat the water in the chamber to generate steam and a passage for allowing the steam to enter the compartments to cook food placed in the compartments. The compartments may be stacked vertically, i.e. one above the other, or positioned side-by-side. On larger food steamers there may be a combination of both stacked and side-by-side food compartments.

In addition to a control switch for switching the food steamer on and off, and an associated LED for indicating whether the food steamer is switched on, the food steamer also includes user input means that is configured to enable a user to select a particular power setting for the heater depending on how many compartments are being used to cook food.

The user input means comprises a switch having a number of positions. Each position of the switch corresponds to a number of compartments capable of receiving food to be cooked. For example, if the steamer has two compartments, the switch may have a first position that is selectable when only one compartment is in use and, a second position that is selectable when both compartments are in use.

The switch controls the power supplied to the heater. For example, when the switch is in its first position and only one compartment is in use, the power supplied to the heater may be set low at, for example, 700W so that food placed in one compartment is cooked without also providing the excess steam intended to heat the not placed compartments. However, if the switch is in its second position, the power supplied to the heater may be higher at, for example, 800W, so that food placed in both compartments is cooked uniformly.

The heater may include multiple heating elements so that only one heating element is activated when the switch is in its first position and both are activated when the switch is in its second position.

A food steamer having three compartments to receive food to be cooked is also envisaged. In this instance, the switch may have a first position, a second intermediate position and a third position. The power supplied to the heater may be low when the switch is in its first position relative to the intermediate and third positions. When the switch is in its intermediate position, the power supplied to the heater may be at a level between the power supplied to the heater when the switch is in its first or third positions, i.e. the power may be at 700W when the switch is in its first position, 800W when the switch is in its intermediate position and 900W when the switch is in its third position.

The heater may comprise three heating elements so that power is supplied to one element when the switch is in its first position, two elements when the switch is in its intermediate position and all three elements when the switch is in its third position. Alternatively, power may be supplied to one heating element when the switch is in its first position, two elements when the switch is in its intermediate position and both elements when the switch is in its third position.

Although embodiments having two or three food compartments are referred to above, it will be appreciated that the food steamer of the invention can be provided with any number of compartments. The switch is then provided with a corresponding number of settings so that the power supplied to the heater can be controlled in dependence on the number of compartments that are actually used. The remaining compartments may be left empty or, may not even be attached to the food steamer.

In addition to an LED to indicate that the food steamer is switched on, a further LED may be associated with each switch position. For example, if the food steamer has two compartments and two corresponding switch positions, one LED may be illuminated when the switch is in its first position and both LED's may be illuminated when the switch is in its second position, thereby indicating to a user that the food steamer is on full power. Alternatively, only one LED may illuminate depending on the switch position.

Similarly, if the food steamer has three compartments and three corresponding switch positions, one LED may be illuminated when the switch is in its first position, two LED's may be illuminated when the switch is in its intermediate position and three LED's may be illuminated when the switch is in its third position. Rather than illuminating multiple LED's, an alternative is to have a separate LED for each switch position, only one of which illuminates depending on the position of the switch.

The LED's may be supplemented or replaced with some other form of indicator or indicia to inform the user how the power supplied to the heater is altered as a result of changing the switch position.

To ensure that the food is heated through quickly when the food steamer is initially switched on, the heater may be configured to operate at a higher power setting than the power setting selected by a user via the user input means for a predetermined time period after the food steamer is switched on. The higher power setting may be the maximum power at which the food steamer can operate. After the time period has elapsed, the power supplied to the heater is dependent on the switch setting input by the user. Alternatively, the heater may be configured to operate at its highest power setting for a time period that is dependent on the switch setting or the number of compartments that are being used to cook food. For instance, if three compartments are being used, the time during which the heater operates at its highest power setting after being switched on may be longer than if two or only one compartment is to be used. The change in the time at which the heater operates at an elevated power (to get a faster heat-up of the food and system itself), when it is switched on, wherein said time period is dependent on the number of compartments that are in use, form another aspect of the invention that may be independent of the control of the power of the food steamer relative to the number of compartments that are in use.

When a user wishes to operate the food steamer of the invention, they place food to be cooked in one or more of the compartments, add water to the chamber and operate the switch to turn the appliance on. The user then manipulates the user input switch to select a preferred power setting depending on whether all or some of the compartments are being used to cook food.

As an alternative to the switched operation above, it is also envisaged that the number of compartments that are used could be determined by a sensor, so that the power setting can be applied automatically. For example, a light could be used to detect the height of the stack of compartments by the time taken for the light to be reflected towards a detector.

The graph of Figure 1 represents the relationship between power and time for a traditional food steamer having three food compartments and from which it is apparent that, irrespective of the number of food compartments that are in use or which are attached to the food steamer, the power remains the same (900W as shown in Figure 1).

Figure 2 shows the relationship between power and time for a food steamer that has been modified according to the invention. In this embodiment, the power level is linked to the number of compartments placed on the food steamer or which are placed on the food steamer and are actually being used to cook food. As shown in Figure 2, the graph shows how the power can be adjusted to the optimal level for the number of baskets that are being used.

More specifically, the overall power level has a maximum (shown as 900W in the graph of Figure 2), for use when all three compartments are being used to steam food, an intermediate power level (shown as 800W), for use when two compartments are being used and, a low power level (shown as 700W), for use when only one compartment is being used.

As shown by the graph of Figure 2, the overall cooking time is constant irrespective of any changes in the power rating. However, the cooking time is selected by the user independently of the power rating and so may be varied depending on the food items being cooked.

The graph of Figure 3 shows a conventional food steamer that is additionally provided with a "boost" or "turbo" function that operates at high or maximum power for an initial period after being switched on to raise the temperature of the apparatus and food quickly to cooking temperature. As shown in Figure 3, the heater runs at the same power rating (2000W) for an initial period and then drops to a 'normal' level (900W) for the remainder of the cooking time. It will be appreciated that the normal level is the same irrespective of the number of compartments placed on the food steamer or which are on the food steamer and contain food to be cooked.

The graph of Figure 4 represents the relationship between power and time for a modified food steamer having three compartments and which is also provided with a 'boost' function that operates at a higher power setting for an initial period to heat up the food and the apparatus quickly. As shown in Figure 4, the food steamer initially runs at a high power rating than the normal rating used to cook food irrespective of the number of compartments that are in use. The initial start-up power rating shown in Figure 2 is 2000W. After the initial start-up period has elapsed, the power drops to a lower level. However, the lower level depends on the number of compartments in use. More specifically, when all three compartments are in use, the power level may drop to around 900W, when two compartments are in use, the power level may drop to around 800W and, when one compartment is in use, the power level may drop to around 600W.

As shown by the graph of Figure 4, the initial start-up power setting may be sustained for a different period of time depending on how many compartments are in use. For example, as shown in the graph of Figure 4, if all three compartments are being used, 2000W may be sustained for a longer period (300 seconds in Figure 4). If two compartments are being used, 2000W may be sustained for an intermediate time period (225 seconds in Figure 4) and, if only one compartment is being used, 2000W may be sustained for a shorter time period (150 seconds in Figure 4). However, it will be appreciated that the higher power level may be sustained for the same period of time irrespective of the number of compartments in use.

Although not shown in Figure 4, the food steamer may also be controlled such that heater operates at a different higher power setting depending on the number of compartments being used to cook food. For example, the higher power setting could be the maximum power setting available if all compartments are being used to cook food, whereas the higher power setting may be lower than the maximum when one or two compartments are being used to cook food.

Although the graph of Figure 4 shows that the total cooking time is the same irrespective of the number of compartments that are in use, it will be appreciated that the total cooking time may be altered depending on the number of compartments in use. For example, irrespective of how long the higher power level is sustained, the total cooking time may be different depending on the number of compartments being used to cook food. If all three compartments are in use, the higher power level may be sustained for a longer period and, similarly, the total cooking time extended by providing a longer period at which the heater operates at the selected power setting for three compartments. If only one compartment is in use, the higher power level may be sustained for a shorter period and, similarly, the total cooking time reduced by providing a shorter period at which the heater operates at the selected power setting for one compartment.

It will be appreciated that the power rating and time values are shown by way of example only and may be varied depending on a specific application. However, it will be appreciated from the foregoing that it is possible to obtain an energy saving of about 30-35% for a single compartment setting and 20% for a two compartment setting.

Although claims have been formulated in this application to particular combinations of features, it should be understood that the scope of the disclosure of the present invention also includes any novel features or any novel combinations of features disclosed herein either explicitly or implicitly or any generalization thereof, whether or not it relates to the same invention as presently claims in any claim and whether or not it mitigates any or all of the same technical problems as does the parent invention. For example, rather than having a switch, the number of compartments being used to cook food may be determined automatically, either by determining whether a compartment has been attached to the food steamer and/or whether a particular compartment that has been attached to the food steamer actually contains food to be cooked. The applicants hereby give notice that new claims may be formulated to such features and/or combinations of features during the prosecution of the present application or of any further application derived there from. It is noted that the invention relates to all possible combinations of features recited in the claims.

## Claims

1. A food steamer comprising a plurality of compartments to receive food to be cooked, a chamber to receive water, a heater to heat the water in the chamber to generate steam for cooking food placed in said compartments and means configured to determine a power setting for the heater depending on how many compartments are being used to cook food.

2. A food steamer according to claim 1, wherein the means configured to determine a power setting for the heater comprises a sensor to automatically detect how many compartments contain food to be cooked.

3. A food steamer according to claim 1, wherein the means configured to determine a power setting for the heater comprises a user operable switch having a number of positions, each position corresponding to a number of compartments capable of receiving food to be cooked.

4. A food steamer according to claim 3, comprising two compartments to receive food to be cooked and the switch has a first and a second position, wherein the power supplied to the heater is low when the switch is in its first position relative to the power supplied to the heater when the switch is in its second position.

5. A food steamer according to claim 4, wherein the heater comprises two heating elements and power is supplied to only one heating element when the switch is in its first position and both heating elements when the switch is in its second position.

6. A food steamer according to claim 3, comprising three compartments to receive food to be cooked and the switch has a first position, a second intermediate position and a third position, wherein the power supplied to the heater is low when the switch is in its first position relative to the intermediate and third positions, the power supplied to the heater when the switch is in its intermediate position being at a level between the power supplied to the heater when the switch is in its first or third positions.

7. A food steamer according to claim 6, wherein the heater comprises three heating elements and power is supplied to one element when the switch is in its first position, two elements when the switch is in its intermediate position and all three elements when the switch is in its third position.

8. A food steamer according to claim 6, wherein the heater comprises two heating elements and power is supplied to one element when the switch is in its first position, the other element when the switch is in its intermediate position and both elements when the switch is in its third position.

9. A food steamer according to any preceding claim, wherein the heater is configured to operate at a power setting higher than a setting determined by said means for a predetermined time period after the food steamer is switched on.

10. A food steamer according to claim 9, wherein the heater is configured to operate at a different higher power setting depending on the number of compartments being used to cook food, as determined by said means.

11. A food steamer according to claim 10, wherein the heater is configured to operate at said higher power setting for a predetermined time period that is dependent on the number of compartments being used to cook food, as determined by said means.

12. A food steamer according to any of claims 9 to 11, wherein the total cooking time, including the time at which the heater operates at a higher power setting and the time at which the heater operates at the power setting determined by said means, changes depending on the number of compartments being used to cook food, as determined by said means.

13. A food steamer according to any preceding claim comprising a plurality of preset operation times selectable by a user.

14. A food steamer comprising a plurality of compartments to receive food to be cooked, a chamber to receive water, a controller, a heater to heat the water in the chamber to generate steam for cooking food placed in said compartments, and user input means for inputting a power setting to the controller, wherein the controller controls the heater so that it operates at a power higher than the power input by the user via the user input means for a predetermined time period after the food steamer is switched on, wherein the controller is configured to detect the number of compartments that are being used to cook food or into which food has been placed and to vary the predetermined time period in dependence on that detection.

15. A method of controlling a food steamer comprising a plurality of compartments to receive food to be cooked, a chamber to receive water, a heater to heat the water in the chamber to generate steam for cooking food placed in said compartments, and determining a power setting for the heater in dependence on the number of compartments being used to cook food.
